# EUROPÄISCHE PATENTANMELDUNG

(11) **EP 2 990 124 A1**
(43) Veröffentlichungstag der Anmeldung: **02.03.2016**
(21) Anmeldenummer: 15002401.6
(22) Anmeldetag: 13.08.2015
(51) Int. Cl.: B05B 1/16, B05B 1/30, B05B 12/14, F16K 31/122, F16K 41/10, F16K 1/38

(54) **VENTIL**

(30) Priorität: 27.08.2014 DE 102014012705
(71) Anmelder: Eisenmann SE, 71032 Böblingen (DE)
(72) Erfinder: Reichler, Jan, 78465 Konstanz (DE); Friederich, Tillmann, 70563 Stuttgart (DE)
(74) Vertreter: Ostertag & Partner Patentanwälte

(57) **Zusammenfassung**

Es ist ein Ventil zur Verwendung in Verbindung mit einem Beschichtungssystem (60) angegeben, insbesondere in Verbindung mit einem Beschichtungssystem (60), bei dem Lacke und/oder Härter zu einer Applikationseinrichtung gefördert werden. Ein Ventilgehäuse (14) hat eine Durchgangsöffnung (24) durch welche eine Ventilspindel (28) tritt, die zwischen einer Schließstellung und einer Freigabestellung verschiebbar gelagert ist und außerhalb des Ventilgehäuses (14) ein Ventilsitzdichtelement (42) trägt. Das Ventilsitzdichtelement (42) trägt einen Membrankragen (54), der an dem Ventilgehäuse (14) angebunden ist und die Durchgangsöffnung (24) abdichtet.

## Beschreibung

Die Erfindung betrifft ein Ventil zur Verwendung in Verbindung mit einem Beschichtungssystem, insbesondere in Verbindung mit einem Beschichtungssystem, bei dem Lacke und/oder Härter zu einer Applikationseinrichtung gefördert werden, mit:
a) einem Ventilgehäuse mit einer Durchgangsöffnung, und
b) einer Ventilspindel, welche durch die Durchgangsöffnung hindurch tritt, zwischen einer Schließstellung und einer Freigabestellung verschiebbar gelagert ist und außerhalb des Ventilgehäuses ein Ventilsitzdichtelement trägt.

Bei Beschichtungssystemen wird der Materialfluss durch derartige Ventile gesteuert. Als Materialien kommen neben Lacken oder Härtern auch andere Materialien in Frage, insbesondere werden auch Reinigungs- oder Lösungsmittel durch die Leitungen gefördert, um das System zu reinigen.

Ventile der eingangs genannten Art sind als Nadelventile beispielsweise aus der DE 10 2006 025 549 A1 bekannt und werden in Beschichtungssystemen zur Steuerung des Beschichtungsmaterialflusses eingesetzt.

Bei dem in der DE 10 2006 025 549 A1 beschriebenen Ventil arbeitet das Dichtelement des Ventils mit einem Ventilsitz zusammen, den es verschließt oder freigibt, wenn die Ventilspindel im Ventilgehäuse ihre Schließstellung bzw. ihre Freigabestellung einnimmt. Das Ventil muss dabei in an sich bekannter Weise in einer geeigneten Ventilaufnahme sitzen, welche den Ventilsitz vorgibt. Die Ventilaufnahme befindet sich beispielsweise in einer das Ventil aufnehmenden Baueinheit, z.B. einen sogenannten Farbwechsler. Die Ventilspindel nimmt in der Regel unter Vorspannung ihre Schließstellung ein. In der Schließstellung nimmt das Ventilsitzdichtelement eine Position ein, in der es gegen den vorhandenen Ventilsitz abdichtet und diesen verschließt. Ein Umschalten zwischen der Schließstellung und der Freigabestellung der Ventilspindel wird bei bekannten Ventilen z.B. mittels eines Druckfluids in Form von Druckluft bewirkt. Hierbei wird ein Kolbenelement an der Ventilspindel im Inneren des Gehäuses durch Zufuhr von Druckluft in einen Kolbenraum gegen eine Feder verschoben, um das Ventil zu öffnen. Die Durchgangsöffnung in dem Gehäuse dient der Führung der Ventilspindel.

In derartigen Ventilanordnungen sind Dichtungen erforderlich, die den Kolbenraum gegen einen Zuführraum auf der anderen Seite der Dichtung abdichten, welcher bei geöffnetem Ventil von dem zu fördernden Medium durchströmt wird. Zu diesem Zweck sind üblicherweise Dichtungselemente vorgesehen, die mit einer ringförmigen Dichtkante an der Ventilspindel anliegen und bei der Hubbewegung der Ventilspindel das an ihr haftende Lackmaterial oder sonstige Medien abstreifen. Bei diesen bekannten Dichtungen besteht das Problem, dass z.B. in einem Lackmaterial enthaltene Festkörper oder Lackablagerungen an der Ventilspindel usw. zu Beschädigungen der Dichtkante führen können. Auch können bestimmte in dieser Hinsicht kritische Lackmedien wie beispielsweise die Härterkomponente von 2K-Lacken, insbesondere Isocyanat, durch die Hubbewegung der Ventilspindel unter die Dichtkante gezogen werden und dann durch eine chemische Reaktion mit Feuchtigkeit aushärten, was ebenfalls zu Funktionsstörungen des Ventils führt. Neben unerwünschten Druckverlusten und dem möglichen Eindringen des Mediums in den Spindelantrieb ist eine typische Funktionsstörung des Ventils ein Anhaften der Ventilspindel in der Dichtung, was derer Bewegung verhindert.

Ein Nadelventil der eingangs genannten Art, insbesondere ein Nadelventil, bei dem bereits eine verbesserte Dichtwirkung ermöglicht ist, ist aus der DE 10 2007 037 663 A1 bekannt. Dort wird als Ventilspindeldichtung eine ringförmige Dichtungsmembran eingesetzt, die entlang ihrer Innenkontur bewegungsfest mit der Ventilspindel verbunden und mit ihr bewegbar ist und entlang ihrer Außenkontur an dem Ventilgehäuse anschließt. Die Anbringung der Dichtungsmembran an die Ventilspindel ist allerdings mit höheren Produktionskosten sowie mit größeren technischen Herausforderungen bezüglich der Dichtwirkung verbunden. Ferner kann es aufgrund eines verbleibenden minimalen Ringspalts an der Verbindungsstelle zwischen der Ventilspindel und der Dichtungsmembran trotz der fehlenden (makroskopischen) Relativbewegung zwischen Ventilspindel und Dichtungsmembran, zu Beeinträchtigungen und sogar Leckagen kommen.

Es ist Aufgabe der Erfindung, ein Ventil der eingangs genannten Art bereitzustellen, welches diesen Gedanken Rechnung trägt.

Diese Aufgabe wird dadurch gelöst, dass
c) das Ventilsitzdichtelement einen Membrankragen trägt, der an dem Ventilgehäuse angebunden ist und die Durchgangsöffnung abdichtet.

Dadurch, dass der Membrankragen von dem Ventilsitzdichtelement getragen ist, tritt die Ventilspindel zu keinem Zeitpunkt in Kontakt mit dem zu fördernden Medium. Zwischen dem Membrankragen und dem Ventilgehäuse ist eine Art Totraum ausgebildet, in dem die Ventilspindel verläuft.

Es ist insbesondere von Vorteil, wenn der Membrankragen Teil eines Dichtorganes mit einem Tragabschnitt ist, wobei der Tragabschnitt das Ventilsitzdichtelement zumindest bereichsweise abdeckt und den Membrankragen trägt. Ein derartiges Dichtorgan kann als eigenständiges Bauteil gefertigt werden, und z.B. kappenartig auf das Ventilsitzdichtelement aufgesetzt werden, was eine vereinfachte Montage und gegebenenfalls einen Austausch eines beeinträchtigten Dichtorgans erlaubt.

Es ist günstig, wenn der Membrankragen integral mit dem Ventilsitzdichtelement verbunden ist. Hierbei steht eine integrale Verbindung für eine unlösbare Verbindung, die beispielsweise durch Stoffschluss hergestellt wurde und die erst aus einem Rohling den Membrankragen entstehen lässt.

Es kann vorteilhaft sein, wenn der Tragabschnitt integral mit dem Ventilsitzdichtelement verbunden ist. Dadurch wird ein Abheben und Lösen des Tragabschnittes von dem Dichtelement verhindert.

Weiterhin können das Ventilsitzdichtelement und der Membrankragen aus demselben Werkstoff gefertigt sein. Hierbei kann unter Umständen dennoch ein Tragabschnitt aus einem davon verschiedenen Werkstoff zielführend sein. Beispielsweise kann dies der Fall sein, wenn für das Tragelement, das mit einem Ventilsitz einer gesonderten Baueinheit in Kontakt steht, eine erhöhte Tragfähigkeit erwünscht ist.

Bei einer bevorzugten Ausbildung der Erfindung ist vorgesehen, dass das Ventilsitzdichtelement und das Dichtorgan aus demselben Werkstoff gefertigt sind.

Ferner ist es von Vorteil, wenn der Membrankragen aus einem flexiblen elastischen Werkstoff gefertigt ist. Alternativ kann ein flexibler anelastischer Werkstoff verwendet werden.

Insbesondere ist vorgesehen, dass der Membrankragen aus einem Kunststoff besteht.

Konkret haben sich in der Praxis Ventile etabliert, bei denen der Kunststoff Polytetrafluorethylen (PTFE) ist.

Nachstehend wird ein Ausführungsbeispiel der Erfindung anhand der Zeichnungen näher erläutert. In diesen zeigen:
- Figur 1: einen Längsschnitt eines ersten Ausführungsbeispiels eines Ventils in einer Freigabekonfiguration;
- Figur 2: einen Längsschnitt des Ventils von Figur 1 in einer Schließkonfiguration;
- Figur 3: einen Längsschnitt einer zweiten Ausführung eines Ventils in einer Freigabekonfiguration;
- Figur 4: einen Längsschnitt des Ventils von Figur 3 in einer Schließkonfiguration.

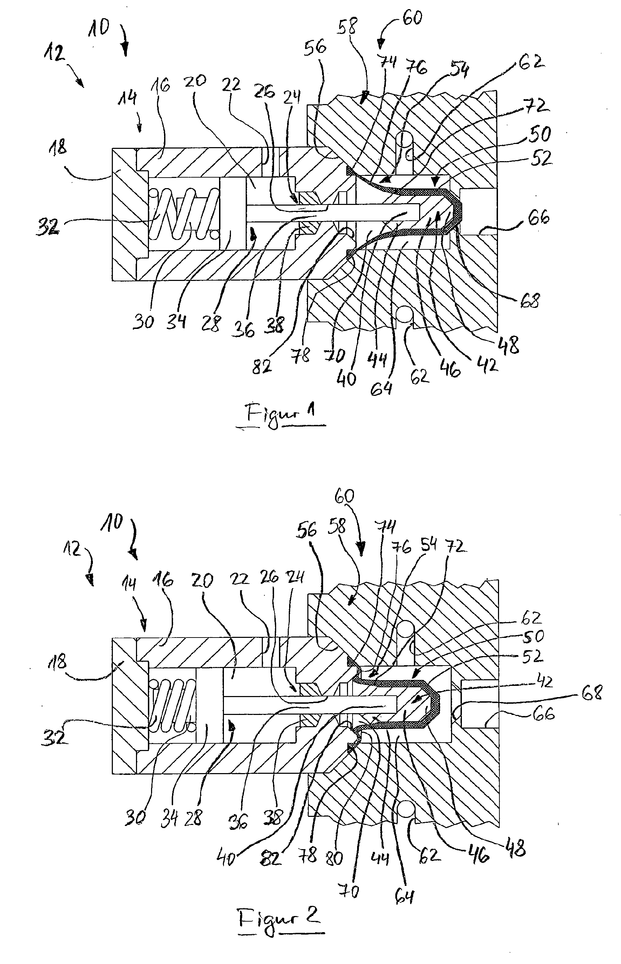

In den Figuren 1 und 2 ist mit 10 insgesamt ein Ventil bezeichnet, das als ein Nadelventil 12 ausgeführt ist und mittels eines Druckfluids, insbesondere mittels Druckluft, betätigbar ist. Das Nadelventil 12 umfasst ein mehrteiliges Ventilgehäuse 14 mit einem im Wesentlichen zylinderförmigen hohlen Gehäusekörper 16, welcher beim vorliegenden Ausführungsbeispiel stirnseitig kegelstumpfförmig ausgeformt ist, und einem Gehäusedeckel 18, die koaxial zueinander angeordnet sind. Der Gehäusekörper 16 und der Gehäusedeckel 18 sind über nicht eigens gekennzeichnete Rast- oder Schraubverbindungen miteinander verbunden.

Das Ventilgehäuse 14 begrenzt einen Kolbenraum 20. Ein Steuerkanal 22 durchdringt den Gehäusekörper 16 in radialer Richtung und mündet in den Kolbenraum 20, so dass die Zufuhr des Druckfluids in den Kolbenraum 20 ermöglicht ist.

An der von dem Gehäusedeckel 18 abliegenden Stirnseite weist der Gehäusekörper 16 eine dazu koaxiale Durchgangsöffnung 24 auf, die in den Kolbenraum 20 mündet und koaxial zu diesem verläuft. Die Durchgangsöffnung 24 wird dabei durch eine kreiszylindrische Führungsfläche 26 begrenzt, die eine verschiebbar gelagerte Ventilspindel 28 führt.

Innerhalb des Ventilgehäuses 14 weist die Ventilspindel 28 einen Federaufnahmeabschnitt 30 auf, der in eine zylindrische Druckfeder 32 hineinragt, welche sich im Kolbenraum 20 an dem Gehäusedeckel 18 abstützt. Durch die Druckfeder 32 wird die Ventilspindel 28 unter Federvorspannung in eine Schließstellung gedrückt, in der die Ventilspindel 32 weiter aus dem Ventilgehäuse 12 ausgefahren ist als in einer Freigabestellung. Der Federaufnahmeabschnitt 30 ist derart dimensioniert, dass ein zur Erreichung der Freigabestellung notwendiger Federweg gewährleistet ist.

An den Federaufnahmeabschnitt 30 schließt sich ein umlaufend radial überstehendes Kolbenelement 34 an, das bewegungsfest von der Ventilspindel 28 umfasst ist und an dem die Druckfeder 32 mit ihrem von dem Gehäusedeckel abliegenden Ende angreift. Das Kolbenelement 34 befindet sich im Kolbenraum 20 und hat in axialer Richtung eine Erstreckung, die kürzer ist als die Länge des Kolbenraums 20 in dieser Richtung.

Dem Kolbenelement 34 folgt ein Führungsabschnitt 36 der Ventilspindel 28, der an der dazu komplementären Führungsfläche 26 der Durchgangsöffnung 24 im Gehäusekörper 14 läuft.

Das Kolbenelement 34 trägt in Umfangsrichtung einen nicht eigens gezeigten Dichtring, der das Kolbenelement 34 gegen die Innenwand des Kolbenraums 20 abdichtet. Außerdem ist an der Durchgangsöffnung 24 des Ventilgehäuses 14 eine Ringdichtung 38 vorhanden, die den Kolbenraum 20 nach außen abdichtet und dort das Austreten des Druckfluids verhindert. Außerhalb des Ventilgehäuses 14 trägt schließlich die Ventilspindel 28 an einem Spindelkopfende 40 ein Ventilsitzdichtelement 42. Dieses ist beispielsweise über einen Rastabschnitt durch Aufstecken auf der Ventilspindel 28 verrastet, wie es an und für sich bekannt ist. Alternativ kann das Ventilsitzdichtelement 42 beispielsweise im Falle eines metallischen Ventilsitzdichtelements mittels einer Presspassung, oder im Falle eines Ventilsitzdichtelements aus einer Keramik oder aus einem Kunststoff mittels einer Klebeverbindung an dem Spindelkopfende 40 befestigt sein.

Das Ventilsitzdichtelement 42 umfasst einen Verbindungsabschnitt 44, der mit der Ventilspindel 28 in Kontakt steht, einen Körperabschnitt 46, der im Wesentlichen kreiszylindrisch ausgestaltet ist, und einen kegelstumpfförmigen Sitzabschnitt 48, der an dem freien Kopfende des Ventilsitzdichtelements 42 gebildet ist.

Bei dem in den Figuren 1 und 2 gezeigten Ausführungsbeispiel des Nadelventils 12 trägt das Ventilsitzdichtelement 42 ein Dichtorgan 50, welches einen Tragabschnitt 52 und einen Membrankragen 54 umfasst. Der Tragabschnitt 52 folgt der Form des Ventilsitzdichtelements 42 und deckt den Sitzabschnitt 48 und den Körperabschnitt 46 am kompletten Umfang dicht ab. Alternativ sind ebenfalls hier nicht eigens gezeigte Materialaussparungen in dem Tragabschnitt 52 denkbar, wobei der Sitzabschnitt 48 von solchen Aussparungen ausgenommen ist. Beispielsweise können auf diese Weise hier nicht eigens gezeigte Stege am Umfang des Körperabschnitts 46 des Ventilsitzdichtelements 42 gebildet sein, die den Tragabschnitt 52 am Sitzabschnitt 48 mit dem Membrankragen 54 verbinden, welcher am Verbindungsabschnitt 44 des Ventilsitzdichtelements 42 getragen und mit diesem integral verbunden ist.

Bei einer weiteren nicht eigens gezeigten Abwandlung kann auf den Tragabschnitt 52 verzichtet werden. In diesem Fall ist der Membrankragen 54 unmittelbar an das Ventilsitzdichtelements 42 angebunden. Für die Abdichtung der Durchgangsöffnung 24 ist grundsätzlich allein der Membrankragen 54 nötig, welcher dann z.B. am Verbindungsabschnitt 44 des Ventilsitzdichtelements 42 getragen und mit diesem integral verbunden ist.

Das beschriebene Nadelventil 14 kann beispielsweise in einer Ventilaufnahme 56 einer Wechseleinheit 58 eingebaut sein, die Teil eines Beschichtungssystems 60 ist, von der in den Figuren lediglich ein Ausschnitt gezeigt ist. Über einen Zuführkanal 62 wird das zu fördernde Medium, beispielsweise Lack oder Härter, einem Zuführraum 64 der Wechseleinheit 58 zugeführt. Ein Abgabekanal 66 ist über einen Ventilsitz 68 mit dem Zuführraum 64 verbunden und leitet das zu fördernde Medium beispielsweise einer Applikationseinrichtung zu.

In ihrer Schließstellung ist die Ventilspindel 28 durch die Federkraft der Druckfeder 32 so weit aus dem Ventilgehäuse 14 ausgefahren, dass das Ventilsitzdichtelement 42 in den Ventilsitz 68 der Wechseleinheit 58 gepresst wird, so dass dieser dicht verschlossen ist. Kontaktflächen des Ventilsitzdichtelements 42 und des Ventilsitzes 68 sind komplementär zueinander, um eine optimale Dichtwirkung zu erzielen. Beim vorliegenden Ausführungsbeispiel sind solche Kontaktflächen konisch ausgebildet.

Der Kontakt zwischen Nadelventil 12 und Ventilsitz 68 erfolgt über den Tragabschnitt 52 des Dichtorgans 50, welcher das Ventilsitzdichtelement 42 abdeckt und dazu eine Kontaktflächenform aufweist, die zu dem Ventilsitz 68 komplementär ausgebildet ist. Die Kontaktflächenform des Sitzabschnitts 48 des Ventilsitzdichtelements 42 unterstützt hierbei die Kraftübertragung auf den Tragabschnitt 52 und verhilft damit zu einer sicheren Dichtung bei der Schließkonfiguration des Nadelventils 12.

In dem oben angesprochenen Fall, dass kein Tragabschnitt 52 vorhanden ist, kann der Kontakt nur über den Sitzbereich 48 des Ventilsitzdichtelements 42 erfolgen.

An den Tragabschnitt 52 schließt umlaufend der Membrankragen 54 an, der sich in der Schließstellung wie in Figur 1 gezeigt, bis zu dem Ventilgehäuse 14 erstreckt und so einen ringförmigen Dichtraum 70 um die Ventilspindel 28 begrenzt. Der Membrankragen 54 weist einen Dichtelementabschnitt 72, der an dem Verbindungsabschnitt 44 des Ventilsitzdichtelements 42 anliegt und mit diesem integral verbunden ist, einen Halteabschnitt 74 und einen dazwischen verlaufenden freien Membranabschnitt 76 auf.

Der Halteabschnitt 74 ist komplementär zu einer Halteschulter 78 des Ventilgehäuses 14 ausgebildet, über welche der Halteabschnitt 74 an das Ventilgehäuse 14 angebunden ist. Die Anbindung kann vom Zweck her unlösbar, beispielsweise mittels Kleben, ausgeführt sein. Alternativ kann die Anbindung auch lösbar, beispielsweise durch Aufstecken, erfolgen.

Der Membranabschnitt 76, als Verbindungsstück zwischen dem Dichtelementabschnitt 72 und dem Gehäuseabschnitt 74, erfüllt die eigentliche Funktion des Abdichtens der Durchgangsöffnung 24 gegen die Außenumgebung des Ventils 10.

Wird nun über den Steuerkanal 22 dem Kolbenraum 20 Druckluft zugeführt und die Federkraft der Druckfeder 32 überwunden, so bewegt sich die Ventilspindel 28 von dem Ventilsitz 68 weg und das Nadelventil 12 geht in die in Figur 2 gezeigten Freigabekonfiguration über.

Dabei kann sich der Membranabschnitt 76 falten und eine entsprechende Welle 80 kann zum Teil in eine Aufnahmefase 82 des Ventilgehäuses 14 eintreten. Hierzu ist vorzugsweise das komplette Dichtorgan 50, insbesondere jedoch zumindest der Membrankragen 76 aus einem flexiblen Kunststoff gefertigt, welcher elastisch oder anelastisch sein kann. Der Membranabschnitt 76 ist dermaßen ausgelegt, dass dieser in der Schließstellung nicht auf Zug belastet wird, so dass eine höhere Bauteilwechselfestigkeit gewährleistet wird. Als Material für den Membrankragen 54 und/oder den Tragabschnitt 52 ist ein flexibler Kunststoff vorgesehen, wobei Polytetrafluorethylen (PTFE) besonders von Vorteil ist. Aber auch andere fluorhaltige Kunststoffe sind hier geeignet. Zum Beispiel kommen Perfluorethylenpropylen FEP, Perfluoralkoxylalkane PFA, Polyvinylidenfluorid PVDF oder auch fluorhaltige Elastomere und auch allgemein vernetzte Elastomere in Frage.

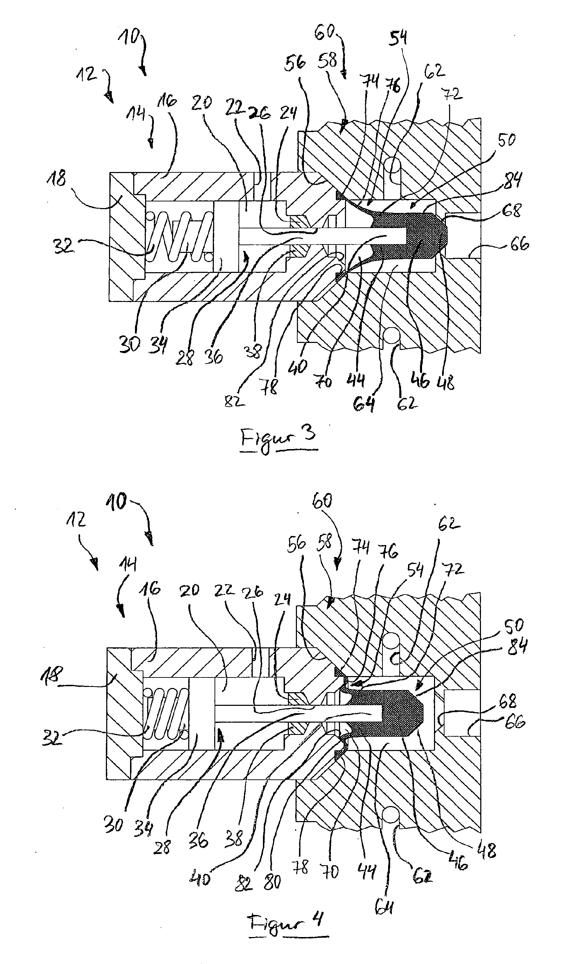

In den Figuren 3 und 4 ist als zweites Ausführungsbeispiel ein Nadelventil 12 dargestellt, bei dem das Ventilsitzdichtelement 42 und das Dichtorgan 50 als ein einziges Bauteil in Form eines Dichtkörpers 84, ausgeführt sind. Komponenten, die denjenigen des Nadelventils 12 nach den Figuren 1 und 2 entsprechen, tragen dort dieselben Bezugszeichen.

Bei einem solchen Dichtkörper 84 lassen sich bei geeigneter Wahl des Werkstoffs Herstell- und Montagekosten niedrig halten. In der Praxis hat sich auch hier als Material Polytetrafluorethylen (PTFE) bewährt. Ein entsprechender Dichtkörper 84 aus PTFE hat genügend Steifigkeit, um die gewünschte Dichtwirkung des Nadelventils 12 zu gewährleisten und ausreichend Flexibilität, um den Membrankragen 54 entsprechend der Vorgaben auszubilden.

## Patentansprüche

1. Ventil zur Verwendung in Verbindung mit einem Beschichtungssystem (60), insbesondere in Verbindung mit einem Beschichtungssystem (60), bei dem Lacke und/oder Härter zu einer Applikationseinrichtung gefördert werden, mit:
d) einem Ventilgehäuse (14) mit einer Durchgangsöffnung (24), und
e) einer Ventilspindel (28), welche durch die Durchgangsöffnung (24) hindurch tritt, zwischen einer Schließstellung und einer Freigabestellung verschiebbar gelagert ist und außerhalb des Ventilgehäuses (14) ein Ventilsitzdichtelement (42) trägt,
**dadurch gekennzeichnet, dass**
f) das Ventilsitzdichtelement (42) einen Membrankragen (54) trägt, der an dem Ventilgehäuse (14) angebunden ist und die Durchgangsöffnung (24) abdichtet.

2. Ventil nach Anspruch 1, **dadurch gekennzeichnet, dass** der Membrankragen (54) Teil eines Dichtorganes (50) mit einem Tragabschnitt (52) ist, wobei der Tragabschnitt (52) das Ventilsitzdichtelement (42) zumindest bereichsweise abdeckt und den Membrankragen (54) trägt.

3. Ventil nach einem der Ansprüche 1 oder 2, **dadurch gekennzeichnet, dass** der Membrankragen (54) integral mit dem Ventilsitzdichtelement (42) verbunden ist.

4. Ventil nach einem der Ansprüche 1 bis 3, **dadurch gekennzeichnet, dass** der Tragabschnitt (52) integral mit dem Ventilsitzdichtelement (42) verbunden ist.

5. Ventil nach einem der Ansprüche 1 bis 4, **dadurch gekennzeichnet, dass** das Ventilsitzdichtelement (42) und der Membrankragen (54) aus demselben Werkstoff gefertigt sind.

6. Ventil nach einem der Ansprüche 1 bis 5, **dadurch gekennzeichnet, dass** das Ventilsitzdichtelement (42) und das Dichtorgan (50) aus demselben Werkstoff gefertigt sind.

7. Ventil nach einem der Ansprüche 1 bis 6, **dadurch gekennzeichnet, dass** der Membrankragen (54) aus einem flexiblen elastischen oder einem flexiblen anelastischen Werkstoff gefertigt ist.

8. Ventil nach Anspruch 7, **dadurch gekennzeichnet, dass** der Membrankragen (54) aus einem Kunststoff besteht.

9. Ventil nach Anspruch 8, **dadurch gekennzeichnet, dass** der Kunststoff Polytetrafluorethylen (PTFE) ist.
